# EUROPEAN PATENT SPECIFICATION

(11) **EP 2 024 286 B1**
(45) Date of publication and mention of the grant of the patent: **22.08.2012**
(21) Application number: 07729766.1
(22) Date of filing: 31.05.2007
(51) Int. Cl.: C01B 33/18, C01F 7/02, C01B 13/14, C09C 1/30, C09C 1/40

(54) **PELLETIZED SILICA**
PELLETIERTES SILICIUMDIOXID
SILICE AGGLOMÉRÉE

(30) Priority: 02.06.2006 WO PCT/EP2006/062883
(43) Date of publication of application: 18.02.2009
(73) Proprietor: Evonik Degussa GmbH, 45128 Essen (DE)
(72) Inventor: COSTA, Lorenzo, 27048 Sommo (PV) (IT); BRAUN, Björn, 28100 Milano (IT)
(74) Representative: Hirsch, Hans-Ludwig
(86) International application number: PCT/EP2007/055365
(87) International publication number: WO 2007/141196

(56) References cited:
- EP-A- 1 266 864
- EP-A1- 0 725 037
- WO-A-2005/085135
- CHANG S M ET AL: "Preparation of large monodispersed spherical silica particles using seed particle growth" JOURNAL OF COLLOID AND INTERFACE SCIENCE, ACADEMIC PRESS, NEW YORK, NY, US, vol. 286, no. 2, 15 June 2005 (2005-06-15), pages 536-542, XP004894856 ISSN: 0021-9797

## Description

The subject of the invention is pelletized silica particles, the method to produces them and their use.

It is known how to produce quartz (silica) glass powder by hydrolyzing alkoxysilane at a specific pH to prepare a gel, powdering the gel, and after drying, calcining the powder (Japanese Patent Application Laid-open (KOKA1) No. 62-17 69 28 (1987)).

Furtheron it is known how to produce synthetic quartz glass powder by the following steps:
a) hydrolyzing an alkoxysilane to form a gel thereof
b) finely dividing the gel and then drying or drying the gel and then finely dividing to form a powder, and
c) calcining the powder of step b) (US 5,516,350).

The particle size of the gel before the calcinaton step was adjusted to a diameter of 60 to 900 µm. The reference is silent about the particle size of the sintered quartz glass powder and the feature on its flowability.

Furtheron it is known how to produce a monolith silica glass article by the following steps:
- hydrolyzing a silicon alkoxide in solution to form a hydrolyzed solution
- adding an effective amount of fumed silica to the hydrolyzed solution to form a sol solution
- gelling the sol solution to form a gel
- drying the gel to form a dry gel and
- sintering the dry gel to form a glass thereby to form a large monolithic silica glass article (US 4,801,318)

This process does not produce a free flowing powder of synthetic quartz.

Furtheron it is known ho to prepare inorganic oxide-based materials of spherical form with substantial monomodal distribution, by the following steps:
- forming a sol of at least one of the inorganic oxides by hydrolyzing a tetraalkoxysilane
- adding to said sol a solvent immiscible with the sol
- finely dispersing the obtained two-phase mixture into a dispersion of particles of equal diameter
- growing said particles by limited coalescence to the desired size and gelling said dispersion (of coalesced droplets) by adding a second solvent containing a gelling agent, and
- removing the solvent.

The spherical material shows in the case of monomodal distribution a diameter between 1nm and 1.000 nm. It can be used as a support for catalysts for the polymerization and copolymerization of olefinically unsaturated compounds (EP 0 537 850 A1).

Furtheron it is known how to prepare spherical silica particles by the following step:
(A) preparing a colloidal silica solution by hydrolyzing a silicon alkoxide on an aqueous media in the presence of mineral or organic acids
(B) possible dispersing fumed silica in the resulting colloidal silica solution
(C) mixing either the pure (step A) or the hybrid (step B) silica sol in an organic media constituted by monofunctional aliphatic alcohols R-OH or mixtures thereof
(D) emulsifying the so obtained mixture
(E) gelifying either the pure or the hybrid silica sol by bringing the previously obtained emulsion into contact with a basic solution
(F) heat treatment of the resulting gel

The spherical silica particles show a particle diameter within the range of from 10 to 100 micrometers (EP 0 653 378 A1).

The transportation, handling and storage of powder material is largely affected by the flowability and hardness of the particles, which consequently have a big commercial impact on the price and the quality of the final product. In particularly the efficiency of the mixing of powders could be strongly driven by the inhomogeneous particle size distribution, particles agglomeration and caking issues.

With the expression "free flowing powder composition" used throughout this specification is meant a powder (made by milling, micropelletizing, or similar technique) of which the particles consist of a composition as defined above and of which the particles do not adhere to one other. The size of the powder particles is expressed in terms of the particles diameter. In general, this size is determined by sieving and is independent of the shape of the particle.

On the contrary cohesive powder are those powders in which the cohesive forces among the particles are very important (strengthwise). As per definition a free flowing powder does not contains fines.

A conventional spray drying technique in which a spray dryer mixes a heated gas with an atomized (sprayed) liquid stream within a vessel (drying chamber) to accomplish evaporation and produce a free flowing dry powder with a controlled average particle size, is that available for instance by SDS Spray Drying Limited. With such spray drier it is possible to produce particle with averaged dimension of 300 micron with rather narrow particle size distribution.

Another even more elegant way to get the pelletization of metal oxides particles is to coat with chemicals like polymers or oils or waxes. In this case the properties of the granules are significately changed for this reason very little is reported in the scientific literature.

Even though in the literature is reported a plethora of methods for the pelletization of metal oxides, at industrial level operation like: the mixing and the transportation, along i.e. moving belt or in pneumatic conveyors are still affected by the well known problems such as:
a) segregation: mainly due to differences on size of the particles, and to a minor extend differences in particle density. More in detail the forces that drive the segregation are: Van der Walls forces, electrostatic forces, liquid bridges, solid matter bridges and entanglement.
b) Percolation, during transit test granules with small sizes can gradually move under the bigger ones and thus leads to a separation of the differently sized particles.

When it comes to purity of the particle a major importance plays the silica. In fact nowadays there is a growing demand of silica with high purity grade for new high end applications, such as: the inner part of crucibles, optical fibers and components for microelectronics among the others. Unfortunately on the market there isn't a large availability of such a product, because of the very high costs and the very complex production procedures.

The subject of the invention is a production method of pelletized silica particles, which are characterized by a round shape and a monomodal particle size distribution.

Particles of silica according to the invention have the said silica as core with all around SiO₂ obtained via hydrolysis of liquid alkoxisilane.

Especially preferred the silica can be SiO₂ as fumed silica or natural quartz. The natural quartz can be i. e. JOTA 4 Type from JOTA Corporation and natural quartz from Norwegian Crystallites.

In a special feature the pelletized inorganic oxide particles the core can consist of natural quartz which is surrounded by silicondioxid, obtained via hydrolysis of liquid alkoxisilane. The alkoxisilane can be preferably tetraalkolisilane like tetraethoxy silane.

The said pelletized inorganic oxide particles produced according to the invention can be characterized by a surface area exceeding 50 m²/g.

The said pelletized inorganic oxide particles can have a size by which at least 90% are bigger than 100 micron. At least 90% of the pores can have a diameter lying between 50 and 1000 Angstrom.

Furthermore the alkoxisilane can be mixed with a soluble salt in order to obtained pelletized inorganic oxide particles doped with metals.

The free-flowing value is in the range from to more preferably from 5 to 2 according to the method developed by Degussa GmbH and published in the Technical Bulletin fine

Particles Number 11 "Basic Characterisation of Aerosil Fumed silica. Powders with bad flow behavior have a mark 5 while powder with very good flow behavior are rated 1.

It is the object of this invention a method for the production of the pelletized silica particles having a round shape and a monomodal particle size distribution. According to the invention, which is characterized in that inorganic silica, to be pelletized, is added under stirring in a vessel containing acidic water, when the dispersion is clearly homogeneous and without lumps liquid alkoxide silane such as i. e. tetramethoxisilane and/or tetraethoxysilane is then added very slowly to the mixture. As consequence of the exothermic reaction the temperature raises. The so obtained dispersion is then transferred slowly by means, for example, of a cannula in a vessel containing an organic solvent or a silicon oil previously mixed with an ammonia derivatives kept under strong stirring. The drops of silica dispersion in contact with the alkaline organic solution form gelly particles that are collected on the bottom of the reactor and then transferred to another vessel to be washed abundantly with water or with water/acetone solution. The organic solvent or the silicon oil is then used for further runs. The particles are then filtered and then the solvent is extracted under supercritical or slightly subcritical conditions. Alternatively the solvent can be removed by control drying under controlled conditions (% humidity and T). The dried particles are then calcinated at high temperature with oxygen for at least 1 hour in order to eliminate traces of the solvents from the silica particles.

More in detail, the invention relates to a method for the production of silica particles out of powder with broad size distribution. The pelletization can be obtained by using sol-gel techniques which has been partially described in the EP 0 537 850 A1.

In a preferred subject of the invention the method can comprise the following features:

At room temperature an acid is added to water in a vessel until an acidic pH (2) is reached. Under strong stirring is then added the silica powder very slowly and afterwards the liquid siliconalkoxide like TEOS(Dynasil A from DEGUSSA AG). As consequence of the exothermic hydrolysis reaction the temperature rises of few degrees. The mixture is then kept under stirring for at least 20 minutes.

After vigorous stirring the solution is then poured in a vessel containing an organic solvent by means of a cannula. The pH is then risen by addition of an amine such as the Primene type supplied by Rohm and Haas, till very alkaline conditions are created, for example pH for 10% in water solution. The temperature further rises. The particles are then removed in continuous from the reaction batch and the obtained particles are then washed abundantly with water, in order to eliminate the residual solvent. The material so obtained is then calcinated in a vertical furnace at 600 ± 150° C for 6 ± 2 hours in order to eliminate residual solvents.

The treated particles have a size in at least 90% of the particle have a size higher than 100 micron. The pelletization is obtained by using tetraethoxysilane as pelletizasing agent.

In case of pelletization of natural quartz powder is slightly different. At room temperature an acid is added to water in a vessel until a very acidic pH is reached (2). Under stirring the liquid siliconalkoxide like TEOS(Dynasil A from DEGUSSA AG) is added to the mixture, as consequence of the exothermic hydrolysis reaction the temperature rises of few degrees. Afterwards the natural quartz powder is then added to the mixture and then kept under stirring for at least 20 minutes.

After vigorous stirring the solution is then poured in a vessel containing an organic solvent kept under strong stirring. The pH is then risen by addition of an amine such as the Primene type supplied by Rohm and Haas, till very alkaline conditions are created, for example pH for 10% in water solution. The temperature further rises. The particles are then removed in continouos from obtained particles are then washed abundantly with water, in order to eliminate the residual solvent. The material so obtained is then calcinated in a vertical furnace at 600 ± 150° C for 6 ± 2 hours in order to eliminate residual solvents.

Elsewhere the patents relates to a free flowing powder composition comprising hydrolyzed silica alkoxide like TEOS and metal oxides and/or a mixture of thereof.

Particles are characterized by the fact that there is an almost continuous phase between the pellettizasing agent (the hydrolised silica alkoxide like TEOS) and the core material, since the pelletisating agent is able to impregnate the inorganic oxide particles.

The glassy particles obtained with this method according to the invention are characterized in terms of: flowability, microporosity and size distribution. Elsewhere, when the said inorganic oxide is silica or silica quartz the method allows to obtain a higher purity of the final product when compared to that of the starting particles. The purity increases approximately as direct function of the quantity of pelletizasing agent silica alkoxide like TEOS used.

The starting pH of the aqueous solution with inorganic oxide particles can be in the rage 1 to 4.

The liquid alkoxi silane can be tetramethoxisilane (CH₃O)₄Si and/or tetraethoxysilane (CH₃-CH₂-O)₄Si.

The organic solvent can be an apolar organic solvent, which has a dielectric constant lower than 60 at 20°C.

The salt to be added in order to obtain the doped silica particles can be inter alias, aluminum acetate, aluminum sulfate, aluminum ammonium sulfate, lead acetate, boric acid, ammonium fluoride sulfate, ammonium fluoride.

The apolar organic solvent can be a liquid alkane such as hexane, eptane, octane, nonane and alcohol such as: propanol, butanol, pentanol, hexanol, eptanol, octanol, nonanol, decanol and a aromatic compound like toluene, benzene, nitrobenzene, chlorobenzene, dichlorobenzene, quinoline, decaline and/or a mixture thereof.

Furtheron as organic solvent silicon oil can be used. The silicon oil can be polydimethylsiloxane fluids like Dimethicone from Wacker Chemie AG listed under the brand name Wacker AK 50.

The organic base ammonia derivative can be cyclohexyilamine, t-alkyl amine.

The pH after the addition of the organic base can be in the range from 8 to 13, more preferably from 10 to 11 expressed as 10% water solution.

The calcinations temperature can be between 300 and 700°C more preferably between 300 and 600°.

The pelletized silica particles are characterized by round shape and they are virtually without fines.

Analysis carried out on the pelletized silica particles showed that the method according to the invention allows obtain a monomodal distribution.

The microporosity and surface area of the material have been determined according to the method DIN 66131 by means of ASAP 2010 instrument from Micromeritics; measurements are carried out in liquid nitrogen.

Before the analysis, the material has been degassed at 300°C for 4h (P= 1*10ex-6).

Flowability has been determined via an extremely simple, but nevertheless meaningful measurement method with viscosity vessels resembling hourglasses. When this method is employed, powder with good flow behaviour still flow out of the glass vessels via a small discharge opening (see Degussa Aerosil Silanes Technical Bulletin Fine particle, pag 56-57, 2005). When the powder/pellets flows only through the very big vessels it is consider a mark 5 while when the powder/pellets flows very easily even through a very thin vessel it has a mark of 1.

Solvents used to disperse the gelly particles during titration with ammonia derivatives are apolar, with dielectric constant not higher than 60. The list of tested solvents includes: alkane such as hexane, eptane, octane, nonane and alcohol such as: propanol, butanol, pentanol, hexanol, eptanol, octanol, nonanol, decanol and a aromatic compound like toluene, benzene, nitrobenzene, chlorobenzene, dichlorobenzene, quinoline and decaline.

The pelletized silica particles purity has been checked via ICP-MAS.

The pelletized silica particles, according to the invention can significantly raise the yield of transportation of the material by reducing the quantity of fines and narrowing the particle size distribution.

### Example 1:

At room temperature (19°C) hydrochloric acid 37 Gew.-% conc., is added to 900 ml of water in a 4 1 vessel till pH 2 is reached. Under stirring are then added very slowly 650g of fumed silica, Aerosil EG50 supplied by Degussa, to be pelletized. When the dispersion is clear and homogeneous and without lumps, 650g TEOS (Dynasil 40 fom DEGUSSA AG) are then added very slowly to the mixture. As consequence of the exothermic hydrolysis reaction the temperature rises up to 24°C. After 1 hour of vigorous stirring the solution is then poured slowly dropwise by means of a cannula in a 22 1 vessel containing 15 1 of silicon oil (Wacker AK 50 from Wacker Chemie) mixed with a tertiary amine that had given a pH of 11 (expressed for a 10% water solution): Primene JM-T (supplied by Rohm and Haas). The temperature further rises up to 31°C. The emulsion containing the gelly particles is then filtered and the so obtained particle are then washed abundantly with water/acetone solution, in order to eliminate the residual silicon oil. The material so obtained is then calcinated in a vertical furnace at 600° C for 8 hour in order to eliminate residual solvents.

### Characterization:

| | |
|---|---|
| Particles size: | The material is characterized by monomodal size distribution |
| | The averaged diameter is 430 micron |
| | Dimension of the starting material 3.7 micron |
| Porosity: | Pores diameter 60 Angstrom, surface area 99 m2/g which is almost twice of the surface area of the starting material. |

### Elemental Analysis:

**Impurities in starting material (ppm)**:

| | |
|---|---|
| Na | 1.6 |
| K | 0.3 |
| Li | 3.8 |
| Al | 23 |
| Ca | 0.5 |
| Fe | 0.6 |
| Ti | 2.4 |
| Co | 0.01 |
| Cu | 0.01 |
| Cr | 0.02 |

**Impurities in final material (ppm):**

| | |
|---|---|
| Na | 0.6 |
| K | 0.05 |
| Li | 3.0 |
| Al | 12 |
| Ca | 0.03 |
| Fe | 0.01 |
| Ti | 1.0 |
| Co | <0.01 |
| Cu | <0.01 |
| Cr | <0.01 |

The pelletisation improves greatly the dimension of the particles and its dispersion as well (monomodal distribution), not only, because the purity of the final material is much better than that of the starting particles.

Flowability: starting material mark is 5 while the palletized silica has a mark of 2, which means the pelletization process has improved the free flowing behaviour.

### Example 2:

At room temperature (19°C) hydrochloric acid 37 Gew.-% conc., is added to 900 ml of water in a 4 1 vessel till pH 2 is reached. Under strong stirring 650 g Tetraethoxysilane (TEOS) (Dynasil 40 from DEGUSSA AG) are added very slowly to the mixture. After 20 minutes stirring are then added very slowly 650 g of natural quartz to be pelletized As consequence of the exothermic hydrolysis reaction the temperature rises up to 22°C. After 1 hour of vigorous stirring the solution is then poured dropwise in a 22 1 vessel containing 15 1 of silicon oil (Wacker AK 50 from Wacker Chemie). The pH is then risen by addition of a tertiary amine: Primene JM-T (supplied by Rohm and Haas), till pH 11 (10.% water solution) is reached, that pH corresponds to a 10% w/w of Primene in silicon oil. The temperature further rises up to 31°C. The emulsion containing the gelly particles is then filtered and the so obtained particle are then washed abundantly with water, in order to eliminate the residual silicon oil. The material so obtained is then calcinated in a vertical furnace at 600° C for 8 hour in order to eliminate residual solvents.

### Characterization:

| | |
|---|---|
| Particles size: | The material is characterized by monomodal size distribution |
| | The averaged diameter is 500 micron |
| | Dimension of the starting material 5.7 micron |
| Porosity: | Surface area 74 m2/g which has to be compared with the almost indetectable low surface area of the natural quartz. |

### Elemental Analysis:

**Impurities in starting material (ppm):**

| | |
|---|---|
| Na | 1.9 |
| K | 0.6 |
| Li | 3.8 |
| Al | 36.0 |
| Ca | 1.0 |
| Fe | 0.4 |
| Ti | 3.2 |
| Co | <0.001 |
| Cu | 0.009 |
| Cr | 0.03 |

**Impurities in final material (ppm) before Calcination**

| | |
|---|---|
| Na | 2.0 |
| K | 0.78 |
| Li | 3.1 |
| Al | 20 |
| Ca | 1.7 |
| Fe | 0.51 |
| Ti | 3.2 |
| Co | <0.01 |
| Cu | <0.015 |
| Cr | 0.43 |

**Impurities in final material (ppm) after calcination:**

| | |
|---|---|
| Na | 0.9 |
| K | 0.59 |
| Li | 2.01 |
| Al | 21.0 |
| Ca | 3.40 |
| Fe | 0.01 |
| Ti | 2.9 |
| Co | <0.01 |
| Cu | <0.01 |
| Cr | <0.02 |

The pelletisation improves greatly the dimension of the particles and its dispersion as well (monomodal distribution), not only, because the purity of the final material is much better than that of the starting particles.

Flowability: starting material mark is 5 while the palletized natural quartz before the calcinations process has a mark of 4 whereas after the calcinations process the mark is between 2 and 3 which means that the pelletization process has improved the free flowing behaviour.

### Example 3:

At room temperature (19°C) hydrochloric acid 37 Gew.-% conc., is added to 900 ml of water in a 4 1 vessel till pH 4 is reached. Under strong stirring 85 g of NH4F are dissolved and always under stirring are then added very slowly 585g of fumed silica, Aerosil EG50 supplied by Degussa, to be pelletized. When the dispersion is clearly homogeneous without lumps 650g TEOS (Dynasil 40 fom DEGUSSA AG) are then added very slowly to the mixture. As consequence of the exothermic hydrolysis reaction the temperature rises up to 24°C. After 1 hour of vigorous stirring the solution is then poured very slowly and dropwise in a 22 1 vessel containing 15 1 of silicon oil (Wacker AK 50 from Wacker Chemie). The pH of the silicon oil bath has been risen by addition of a tertiary amine: Primene JM-T (supplied by Rohm and Haas), till pH 11 (10% water solution) is reached, that pH corresponds to a 10% w/w of Primene in silicon oil. The temperature further rises up to 31°C. The emulsion containing the gelly particles is then filtered and the so obtained particle are then washed abundantly with acetone/water solution, in order to eliminate the residual silicon oil. The material so obtained is then calcinated in a vertical furnace at 600° C for 8 hour in order to eliminate residual solvents.

### Characterization:

| | |
|---|---|
| Particles size: | The material is characterized by monomodal size distribution |
| | The averaged diameter is 300 micron |
| | Dimension of the starting material 5.7 micron |

## Claims

1. A method for the production of pelletized silica particles having a round shape and a monomodal particle size distribution, **characterized in that**, silica particles are dispersed in water at acidic pH under stirring, an liquid alkoxide silane is then added, the so obtained dispersion is transferred under strong stirring in to a vessel containing an organic solvent, then the pH is raised by the addition of an anorganic base ammonia derivative, the obtained gelly particles are washed abundantly with water or with water/acetone solution, the particles are then filtered and then calcinated at high temperature for at least 1 hour in order to eliminate traces of the solvent from the inorganic oxide particles.

2. The method according to claim 1, **characterized in that** in which the said silica is fumed silica.

3. The method according to claim 1, **characterized in that** in which the starting pH of the aqueous solution with silica particles is in the range 1 to 4.

4. The method according to claim 1, **characterized in that** the liquid alkoxisilane is tetramethoxysilane and/or tetraethoxysilane.

5. The method according to claim 1, **characterized in that** said organic solvent is an apolar organic solvent and has a dielectric constant lower than 60 at 20°C.

6. The method according to claim 1 **characterized in that** the water solution contains a soluble salt considered as a doping agent for the final pellets.

7. The method according to claim 5, **characterized in that** said apolar organic solvent is a liquid alkane such as hexane, heptane, octane, nonane or silicon oil and alcohol such as: propanol, butanol, pentanol, hexanol, eptanol, octanol, nonanol, decanol and a aromatic compound like toluene, benzene, nitrobenzene, chlorobenzene, dichlorobenzene, quinoline, decaline and/or a mixture thereof.

8. The method according to claim 1, **characterized in, that** said ammonia derivative is cyclohexylamine, t-alkyl amine.

9. The method according to claim 1, **characterized in that** the pH after the addition of the organic base is in the range from 8 to 12, more preferably from 10 to 12.

10. The method according to claim 1, **characterized in that** the calcinations temperature is between 300 and 800°C, more preferably between 300 and 600.°

11. A method for the production of pelletized natural quartz particles having a round shape and a monomodal particle size distribution, **characterized in that**, to water at acidic pH under stirring, an liquid alkoxide silane is added, and then under strong stirring natural quartz powder is added to the solution and the so obtained dispersion is transferred under strong stirring into a vessel containing an organic solvent, then the pH is raised by the addition of an inorganic base ammonia derivative, the obtained gelly particles are washed abundantly with water or with water/acetone solution, the particles are then filtered and then calcinated at high temperature for at least 1 hour in order to eliminate traces of the solvent from the inorganic oxide particles.

12. The method according to claim 11, **characterized in that** in which the starting pH of the aqueous solution with silica particles is in the range 1 to 4.

13. The method according to claim 11, **characterized in that** the liquid alkoxisilane is tetramethoxysilane and/or tetraethoxysilane.

14. The method according to claim 11, **characterized in that** said organic solvent is an apolar organic solvent and has a dielectric constant lower than 60 at 20°C.

15. The method according to claim 11, **characterized in that** the water solution contains a soluble salt considered as a doping agent for the final pellets.

16. The method according to claim 11, **characterized in that** said apolar organic solvent is a liquid alkane such as hexane, heptane, octane, nonane or silicon oil and alcohol such as propanol, butanol, pentanol, hexanol, heptanol, octanol, nonanol, decanol and a aromatic compound like toluene, benzene, nitrobenzene, chlorobenzene, dichlorobenzene, quinoline, decaline and/or a mixture thereof.

17. The method according to claim 11, **characterized in, that** said ammonia derivative is cyclohexylamine, t-alkyl amine.

18. The method according to claim 12, **characterized in that** the pH after the addition of the organic base is in the range from 8 to 12, more preferably from 10 to 12.

19. The method according to claim 12, **characterized in that** the calcination temperature is between 300 and 800°C, more preferably between 300 and 600.°

## Patentansprüche

1. Verfahren zur Herstellung von granulierten Siliciumoxidteilchen mit runder Form und monomodaler Teilchengrößenverteilung, **dadurch gekennzeichnet, dass** man Siliciumoxidteilchen unter Rühren in Wasser bei saurem pH-Wert dispergiert, dann ein flüssiges Alkoxysilan zugibt, die so erhaltene Dispersion unter kräftigem Rühren in ein Gefäß, das ein organisches Lösungsmittel enthält, überführt, dann den pH-Wert durch Zugabe eines als organische Base dienenden Ammoniakderivats erhöht, die erhaltenen gelartigen Teilchen ausgiebig mit Wasser oder mit Wasser/Aceton-Lösung wäscht, die Teilchen dann abfiltriert und dann zur Entfernung von Spuren des Lösungsmittels aus den anorganischen Oxidteilchen mindestens 1 Stunde bei hoher Temperatur calciniert.

2. Verfahren nach Anspruch 1, **dadurch gekennzeichnet, dass** es sich bei dem Siliciumoxid um pyrogen hergestelltes Siliciumoxid handelt.

3. Verfahren nach Anspruch 1, **dadurch gekennzeichnet, dass** der Ausgangs-pH-Wert der wässrigen Lösung mit Siliciumoxidteilchen im Bereich von 1 bis 4 liegt.

4. Verfahren nach Anspruch 1, **dadurch gekennzeichnet, dass** es sich bei dem flüssigen Alkoxysilan um Tetramethoxysilan und/oder Tetraethoxysilan handelt.

5. Verfahren nach Anspruch 1, **dadurch gekennzeichnet, dass** es sich bei dem organischen Lösungsmittel um ein unpolares organisches Lösungsmittel mit einer Dielektrizitätskonstante von weniger als 60 bei 20°C handelt.

6. Verfahren nach Anspruch 1, **dadurch gekennzeichnet, dass** die Wasserlösung ein lösliches Salz, das als Dotiermittel für das fertige Granulat erachtet wird, enthält.

7. Verfahren nach Anspruch 5, **dadurch gekennzeichnet, dass** es sich bei dem unpolaren organischen Lösungsmittel um ein flüssiges Alkan wie Hexan, Heptan, Octan, Nonan oder Silikonöl und Alkohol wie Propanol, Butanol, Pentanol, Hexanol, Heptanol, Octanol, Nonanol, Decanol und eine aromatische Verbindung wie Toluol, Benzol, Nitrobenzol, Chlorbenzol, Dichlorbenzol, Chinolin, Decalin und/oder eine Mischung davon handelt.

8. Verfahren nach Anspruch 1, **dadurch gekennzeichnet, dass** es sich bei dem Ammoniakderivat um Cyclohexylamin, t-Alkylamin handelt.

9. Verfahren nach Anspruch 1, **dadurch gekennzeichnet, dass** der pH-Wert nach der Zugabe der organischen Base im Bereich von 8 bis 12, weiter bevorzugt von 10 bis 12, liegt.

10. Verfahren nach Anspruch 1, **dadurch gekennzeichnet, dass** die Calcinierungstemperatur zwischen 300 und 800°C, weiter bevorzugt zwischen 300 und 600°, liegt.

11. Verfahren zur Herstellung von granulierten Teilchen aus natürlichem Quarz mit runder Form und monomodaler Teilchengrößenverteilung, **dadurch gekennzeichnet, dass** man ein flüssiges Alkoxysilan unter Rühren zu Wasser bei saurem pH-Wert gibt, dann unter kräftigem Rühren Pulver aus natürlichem Quarz zu der Lösung gibt und die so erhaltene Dispersion unter kräftigem Rühren in ein Gefäß, das ein organisches Lösungsmittel enthält, überführt, dann den pH-Wert durch Zugabe eines als organische Base dienenden Ammoniakderivats erhöht, die erhaltenen gelartigen Teilchen ausgiebig mit Wasser oder mit Wasser/Aceton-Lösung wäscht, die Teilchen dann abfiltriert und dann zur Entfernung von Spuren des Lösungsmittels aus den anorganischen Oxidteilchen mindestens 1 Stunde bei hoher Temperatur calciniert.

12. Verfahren nach Anspruch 11, **dadurch gekennzeichnet, dass** der Ausgangs-pH-Wert der wässrigen Lösung mit Siliciumoxidteilchen im Bereich von 1 bis 4 liegt.

13. Verfahren nach Anspruch 11, **dadurch gekennzeichnet, dass** es sich bei dem flüssigen Alkoxysilan um Tetramethoxysilan und/oder Tetraethoxysilan handelt.

14. Verfahren nach Anspruch 11, **dadurch gekennzeichnet, dass** es sich bei dem organischen Lösungsmittel um ein unpolares organisches Lösungsmittel mit einer Dielektrizitätskonstante von weniger als 60 bei 20°C handelt.

15. Verfahren nach Anspruch 11, **dadurch gekennzeichnet, dass** die Wasserlösung ein lösliches Salz, das als Dotiermittel für das fertige Granulat erachtet wird, enthält.

16. Verfahren nach Anspruch 11, **dadurch gekennzeichnet, dass** es sich bei dem unpolaren organischen Lösungsmittel um ein flüssiges Alkan wie Hexan, Heptan, Octan, Nonan oder Silikonöl und Alkohol wie Propanol, Butanol, Pentanol, Hexanol, Heptanol, Octanol, Nonanol, Decanol und eine aromatische Verbindung wie Toluol, Benzol, Nitrobenzol, Chlorbenzol, Dichlorbenzol, Chinolin, Decalin und/oder eine Mischung davon handelt.

17. Verfahren nach Anspruch 11, **dadurch gekennzeichnet, dass** es sich bei dem Ammoniakderivat um Cyclohexylamin, t-Alkylamin handelt.

18. Verfahren nach Anspruch 12, **dadurch gekennzeichnet, dass** der pH-Wert nach der Zugabe der organischen Base im Bereich von 8 bis 12, weiter bevorzugt von 10 bis 12, liegt.

19. Verfahren nach Anspruch 12, **dadurch gekennzeichnet, dass** die Calcinierungstemperatur zwischen 300 und 800°C, weiter bevorzugt zwischen 300 und 600°, liegt.

## Revendications

1. Procédé de fabrication de particules de silice agglomérée de forme arrondie et ayant une distribution granulométrique monomodale, **caractérisé en ce que** des particules de silice sont dispersées dans de l'eau à un pH acide sous agitation, un alcoxysilane liquide est ensuite ajouté, la dispersion ainsi obtenue est transférée sous agitation énergique à un récipient contenant un solvant organique, puis le pH est augmenté par addition d'un dérivé d'ammoniac en tant que base organique, les particules de gel obtenues sont lavées abondamment avec de l'eau ou avec une solution aqueuse d'acétone, les particules étant ensuite filtrées puis calcinées à haute température pendant au moins 1 heure afin d'éliminer les traces du solvant des particules d'oxyde inorganique.

2. Procédé selon la revendication 1, **caractérisé en ce que**, dans ledit procédé, ladite silice est de la silice pyrogénée.

3. Procédé selon la revendication 1, **caractérisé en ce que**, dans ledit procédé, le pH de départ de la solution aqueuse contenant les particules de silice est de 1 à 4.

4. Procédé selon la revendication 1, **caractérisé en ce que** l'alcoxysilane liquide est le tétraméthoxysilane et/ou le tétraéthoxysilane.

5. Procédé selon la revendication 1, **caractérisé en ce que** ledit solvant organique est un solvant organique apolaire et a une constante diélectrique inférieure à 60 à 20 °C.

6. Procédé selon la revendication 1, **caractérisé en ce que** la solution aqueuse contient un sel soluble considéré comme un agent de dopage pour les granulés finaux.

7. Procédé selon la revendication 5, **caractérisé en ce que** ledit solvant organique apolaire est un alcane liquide tel que l'hexane, l'heptane, l'octane, le nonane ou une huile de silicone et un alcool tel que le propanol, le butanol, le pentanol, l'hexanol, l'heptanol, l'octanol, l'alcool nonylique, le décanol et un composé aromatique comme le toluène, le benzène, le nitrobenzène, le chlorobenzène, le dichlorobenzène, la quinoline, la décaline, et/ou un mélange de ceux-ci.

8. Procédé selon la revendication 1, **caractérisé en ce que** ledit dérivé d'ammoniac est la cyclohexylamine, la t-alkylamine.

9. Procédé selon la revendication 1, **caractérisé en ce que** le pH après l'addition de la base organique est de 8 à 12, plus préférablement de 10 à 12.

10. Procédé selon la revendication 1, **caractérisé en ce que** la température de calcination est de 300°C à 800°C, plus préférablement de 300°C à 600°C.

11. Procédé de fabrication de particules de quartz naturel aggloméré de forme arrondie et ayant une distribution granulométrique monomodale, **caractérisé en ce qu'**un alcoxysilane liquide est ajouté à de l'eau à un pH acide sous agitation, puis une poudre de quartz naturel est ajoutée à la solution sous agitation énergique, et la dispersion ainsi obtenue est transférée sous agitation énergique à un récipient contenant un solvant organique, puis le pH est augmenté par addition d'un dérivé d'ammoniac en tant que base organique, les particules de gel obtenues sont lavées abondamment avec de l'eau ou avec une solution aqueuse d'acétone, les particules étant ensuite filtrées puis calcinées à haute température pendant au moins 1 heure afin d'éliminer les traces du solvant des particules d'oxyde inorganique.

12. Procédé selon la revendication 11, **caractérisé en ce que**, dans ledit procédé, le pH de départ de la solution aqueuse contenant les particules de silice est de 1 à 4.

13. Procédé selon la revendication 11, **caractérisé en ce que** l'alcoxysilane liquide est le tétraméthoxysilane et/ou le tétraéthoxysilane.

14. Procédé selon la revendication 11, **caractérisé en ce que** ledit solvant organique est un solvant organique apolaire et a une constante diélectrique inférieure à 60 à 20 °C.

15. Procédé selon la revendication 11, **caractérisé en ce que** la solution aqueuse contient un sel soluble considéré comme un agent de dopage pour les granulés finaux.

16. Procédé selon la revendication 11, **caractérisé en ce que** ledit solvant organique apolaire est un alcane liquide tel que l'hexane, l'heptane, l'octane, le nonane ou une huile de silicone et un alcool tel que le propanol, le butanol, le pentanol, l'hexanol, l'heptanol, l'octanol, l'alcool nonylique, le décanol et un composé aromatique comme le toluène, le benzène, le nitrobenzène, le chlorobenzène, le dichlorobenzène, la quinoline, la décaline, et/ou un mélange de ceux-ci.

17. Procédé selon la revendication 11, **caractérisé en ce que** ledit dérivé d'ammoniac est la cyclohexylamine, la t-alkylamine.

18. Procédé selon la revendication 12, **caractérisé en ce que** le pH après l'addition de la base organique est de 8 à 12, plus préférablement de 10 à 12.

19. Procédé selon la revendication 12, **caractérisé en ce que** la température de calcination est de 300 °C à 800 °C, plus préférablement de 300 °C à 600 °C.
